# EUROPEAN PATENT SPECIFICATION

(11) **EP 3 783 172 B1**
(45) Date of publication and mention of the grant of the patent: **02.08.2023**
(21) Application number: 18912529.7
(22) Date of filing: 06.06.2018
(51) Int. Cl.: E04H 14/00, C02F 3/30, E04H 1/04, A01K 63/04, E03B 1/04, E03B 5/02, E03F 1/00

(54) **ECOLOGICAL BUILDING WITH ORGANIC AGRICULTURAL AQUACULTURE FUNCTION AND INTERNAL CIRCULATION TREATMENT FUNCTION**
ÖKOLOGISCHES GEBÄUDE MIT ORGANISCHER LANDWIRTSCHAFTLICHER AQUAKULTURFUNKTION UND INTERNER ZIRKULATIONSBEHANDLUNGSFUNKTION
BÂTIMENT ÉCOLOGIQUE AVEC FONCTION D'AQUACULTURE AGRICOLE ORGANIQUE ET FONCTION DE TRAITEMENT DE CIRCULATION INTERNE

(30) Priority: 28.03.2018 CN 201810264064
(43) Date of publication of application: 24.02.2021
(73) Proprietor: Song, Zhiyuan, Chengdu, Sichuan 610000 (CN)
(72) Inventor: Song, Zhiyuan, Chengdu, Sichuan 610000 (CN)
(74) Representative: Biallo, Dario
(86) International application number: PCT/CN2018/090171
(87) International publication number: WO 2019/184087

(56) References cited:
- CN-A- 1 429 961
- CN-A- 1 515 143
- CN-U- 203 783 233
- CN-U- 205 617 891
- CN-U- 205 617 891
- CN-U- 206 600 043
- CN-U- 206 600 043
- KR-A- 20150 070 643
- US-A- 4 761 716
- US-A- 4 761 716

## Description

### FIELD

This application relates to a comprehensive technical field covering agriculture, aquaculture, cultivation, construction and environmental governance, and in particular to an ecological building with an organic agricultural and aquacultural function and an internal circulation treatment function.

### BACKGROUND

A Chinese Patent Application No. 200620035295.7 titled "ECONOMICAL ECOLOGICAL BUILDING CONSTRUCTION MODE" realizes the cultivation of agricultural crops on the roof, the balcony and the courtyard of a building. Limited by the site area, however, the planting area is small and the yield is low, which cannot have a large-scale organic agricultural production. And due to the lack of the related technology, the vertical face of the external wall, which is dozens to hundreds of times of a total area of the roof, the balcony and the courtyard of the building, has not been effectively utilized. In addition, in the technical solution of the above Chinese Patent Application, the polluted wastewater (such as laundry wastewater and feces) is discharged out of the building through the sewage pipeline system and treated, which fails to realize the internal circulation treatment and use of the building domestic waste (kitchen waste, kitchen waste water, feces, laundry water, bath water) in the building, and cannot realize zero discharge of domestic waste.
CN205617891U discloses a compound ecological room of modularization belongs to environmental protection room technical field, and it includes the house main part, plants the module, breeds the module and change the excrement and the purification module, plant the module include indoor planting platform, a plurality of planting groove and with plant the planting feed pipe of groove intercommunication, it sets up to plant the groove on the indoor planting platform, inside indoor planting space and the indoor activity space of being separated into of house main part, be equipped with at least one closestool in the indoor activity space, the breed groove of breeding the module sets up indoor planting platform below, the liquid manure tank setting of changing of changing excrement and purification module is in indoor activity space below.

### SUMMARY

### TECHNICAL ISSUE

An object of the present application is to overcome the defects of the conventional technology and provide an ecological building with an organic agricultural and aquacultural function and an internal circulation treatment function.

### PROBLEM SOLUTION

### TECHNICAL SOLUTION

The object of the present application is realized by the following technical solution: an ecological building with an organic agricultural and aquacultural function and an internal circulation treatment function. Multi-storey family units are provided on an inner side of a wall body of the ecological building and at least two replaceable planting boxes are provided on an outer wall of the wall. A multi-row irrigation pipe network is provided between the replaceable planting boxes for irrigating water and fertilizer, and a water and fertilizer irrigation pipeline is further provided on the outer wall of the wall body. The water and fertilizer irrigation pipeline is in communication with the irrigation pipe network. Each family unit includes an agricultural and aquacultural layer and a residential layer. An outer edge of the agricultural and aquacultural layer extends outside a corridor to form an annular U-shaped frame. The outer edge of the residential layer extends outside the wall to form an annular production maintenance passage. A left retracting and releasing mechanism and a right retracting and releasing mechanism are respectively provided on a left side and a right side of the production maintenance passage. A left fish vegetable symbiotic aquaculture device and a right fish vegetable symbiotic aquaculture device are provided on the agricultural and aquacultural layer. The residential layer includes a plurality of beams arranged side by side, and a flip plate is provided between two adjacent beams. An end of the flip plate is hinged on one beam, and the other end of the flip plate is placed on another beam. The bottom of the flip plate is provided with an LED light source. A wall between the agricultural and aquacultural layer and the residential layer is provided with a passage.

The right fish vegetable symbiotic aquaculture device includes an agricultural and aquacultural box, a circulating pump provided on the agricultural and aquacultural box, a right position-limiting baffle fixedly provided on a right side of the U-shaped frame, a rack and a left position-limiting baffle fixedly provided on the top of the agricultural and aquacultural layer. The rack is located between the left position-limiting baffle and the right position-limiting baffle. The bottom of the agricultural and aquacultural box is rotationally provided with multiple gears, and the multiple gears are engaged with the rack. A partition plate tilted downwards to the left is fixedly arranged in the agricultural and aquacultural box, and a water inlet hole is provided at a low position of the partition plate. A ceramic gravel layer is laid above the partition plate. The bottom of the agricultural and aquacultural box tilts downwards to the right. A water outlet hole is provided at the bottom of the agricultural and aquacultural box, and the water outlet hole is located at a low position of a tilted plane at the bottom of the agricultural and aquacultural box. The water outlet hole is connected to an inlet end of the circulating pump via a pipeline, and an outlet end of the circulating pump is connected to a drainage pipe located above the ceramic gravel layer. Multiple water outlet joints is provided below the drainage pipe.

The right retracting and releasing mechanism includes an intermediate guide wheel arranged between the left fish vegetable symbiotic aquaculture device and the right fish vegetable symbiotic aquaculture device, a handle, a support and a double grooved wheel fixedly arranged on the right side of the production maintenance passage, a guide wheel A arranged on the right side of the right position-limiting baffle, a guide wheel B arranged at the bottom of the beam, an L plate arranged on the support, a first reel rotationally installed on the support, and a second reel rotationally installed on the L plate. The first reel and the second reel are provided with a key groove. The handle is provided with a key engaging with the key groove. The first reel is wound with a first steel rope, and a head end of the first steel rope sequentially passes through a trunking on the double grooved wheel and a trunking of the guide wheel A, and is fixed on the right side of the agricultural and aquacultural box of the right fish vegetable symbiotic aquaculture device. The second reel is wound with a second steel rope, a head end of the second steel rope sequentially passes through the other trunking on the double grooved wheel, a trunking of the guide wheel B and a trunking of the intermediate guide wheel, and is fixed on the left side of the agricultural and aquacultural box of the right fish vegetable symbiotic aquaculture device. The intermediate guide wheel is a double-trunking guide wheel.

The ecological building also includes an artificial wetland system, a biogas digester, a gas storage tank, a vacuum base station and a biogas slurry storage pool provided below the ground. The biogas digester is in communication with the vacuum base station. The vacuum base station is connected to a vacuum toilet system via a vacuum pipeline. The biogas digester is in communication with the biogas slurry storage pool via a biogas slurry pipeline. An inlet end of the biogas digester is connected to a discharge outlet of a garbage crusher via a black water delivery pipeline. A biogas outlet of the biogas digester is connected to an inlet of the gas storage tank, and an outlet of the gas storage tank is connected to a gas pipeline in a kitchen via a biogas pipeline. An outlet end of the biogas slurry storage pool is connected to a lift pump, and the outlet end of the lift pump is connected to a lower end portion of a water and fertilizer irrigation pipeline. The inlet end of the artificial wetland system is connected to a reclaimed water collection pipeline, and the reclaimed water collection pipeline is in communication with a reclaimed water discharge outlet in the building. The outlet end of the artificial wetland system is connected to a water pump, and the water outlet of the water pump is connected to the lower end portion of the water and fertilizer irrigation pipeline.

The left fish vegetable symbiotic aquaculture device and the right fish vegetable symbiotic aquaculture device are symmetrically arranged.

The left retracting and releasing mechanism and the right retracting and releasing mechanism are symmetrically arranged.

The replaceable planting box is arranged on the support.

The production maintenance passage is provided with an operation passage, and the top of the operation passage is hinged with a cover plate.

The width of the production maintenance passage is 60~80cm.

A safety net is provided on an edge of the production maintenance passage.

A liquid level sensor is provided in the biogas slurry storage pool.

The ecological building also includes a biogas slurry drip irrigation control system which is electrically connected with the lift pump, the water pump, the circulating pump and the liquid level sensor.

### BENEFICIAL EFFECT OF THE APPLICATION

### BENEFICIAL EFFECT

The present application has the following advantages: (1) The present application can create hundreds of millions of mu of new plantable land for the country, realize crop rotation or fallow of most cultivated land, and save trillions of investment and maintenance costs of urban sewage treatment equipment and facilities. (2) The present application can realize a negative growth of chemical fertilizer and create hundreds of millions of tons of organic fertilizer and tens of billion of cubic meters of biogas for the country every year at the same time. (3) The present application can purify urban air and produce safe, ecological and organic vegetables and fruits on a large scale, and can promote the health and longevity of urban residents. (4) The present application functions to wastewater recycling, purification and rainwater collection by using the community artificial wetland system, and solves the trillions of construction investment with low efficiency and negative efficiency of the sponge city promoted by nation. (5) The present application may be used for the reconstruction of old houses, and be suitable for residential quarters, office buildings, schools, hotels and the like, and have the characteristics of wide application range. (6) The present application fully uses an elevation of an external wall of the building for a large-scale organic crop cultivation, which may save a lot of cultivated land, and alleviate the air pollution problem of the city through the absorption and degradation function of the organic crops, so as to produce huge economic and social benefits. (7) The present application carries out the resourceful treatment for all domestic garbage through the biogas digester and the artificial wetland system, and realizes the reuse of domestic waste after the resourceful treatment through the biogas slurry pipeline, the biogas pipeline, the biogas slurry storage pool and the irrigation water and fertilizer pipe network, so as to realize zero discharge of domestic waste in a real sense.

### DESCRIPTION OF THE DRAWINGS

Figure 1 is a schematic structural view of the present application;
Figure 2 is a schematic structural view of a family unit;
Figure 3 is a schematic structural view of a right fish vegetable symbiotic aquaculture device;
Figure 4 is a schematic view showing an installation between a support and a reel;
Figure 5 is a schematic structural view of a handle;
Figure 6 is a schematic structural view of a first reel; and
Figure 7 is a schematic structural view of a U-shaped frame.

In the figures,

| | | | |
|---|---|---|---|
| 1 | wall body, | 2 | family unit, |
| 3 | replaceable planting box, | | |
| 4 | water and fertilizer irrigation pipeline, | | |
| 5 | irrigation pipe network, | 6 | artificial wetland system, |
| 7 | biogas digester, | 8 | vacuum base station, |
| 9 | biogas slurry storage pool, | 10 | vacuum pipeline, |
| 11 | biogas slurry pipeline, | 12 | black water delivery pipeline, |
| 13 | biogas pipeline, | 14 | lift pump, |
| 15 | reclaimed water collection pipeline, | 16 | water pump, |
| 17 | agricultural and aquacultural layer, | 18 | residential layer, |
| 19 | U-shaped frame, | 20 | production maintenance passage, |
| 21 | left retracting and releasing mechanism, | | |
| 22 | right retracting and releasing mechanism, | | |
| 23 | left fish vegetable symbiotic aquaculture device, | | |
| 24 | right fish vegetable symbiotic aquaculture device, | | |
| 25 | beam, | 26 | flip plate, |
| 27 | agricultural and aquacultural box, | 28 | circulating pump, |
| 29 | right position-limiting baffle, | 30 | rack, |
| 31 | left position-limiting baffle, | 32 | gear, |
| 33 | partition plate, | 34 | water inlet hole, |
| 35 | ceramic gravel layer, | 36 | water outlet hole, |
| 37 | intermediate guide wheel, | 38 | handle, |
| 39 | support, | 40 | double grooved wheel, |
| 41 | guide wheel A, | 42 | guide wheel B, |
| 43 | first reel, | 44 | second reel, |
| 45 | key groove, | 46 | key, |
| 47 | first steel rope, | 48 | second steel rope, |
| 49 | gas storage tank, | 50 | drainage pipe, |
| 51 | operation passage, | 52 | cover plate, |
| 53 | LED light source. | | |

### DETAILED DESCRIPTION OF THE EMBODIMENTS

The present application will be further described below with reference to the accompanying drawings, and the scope of the present application is not limited to the following description.

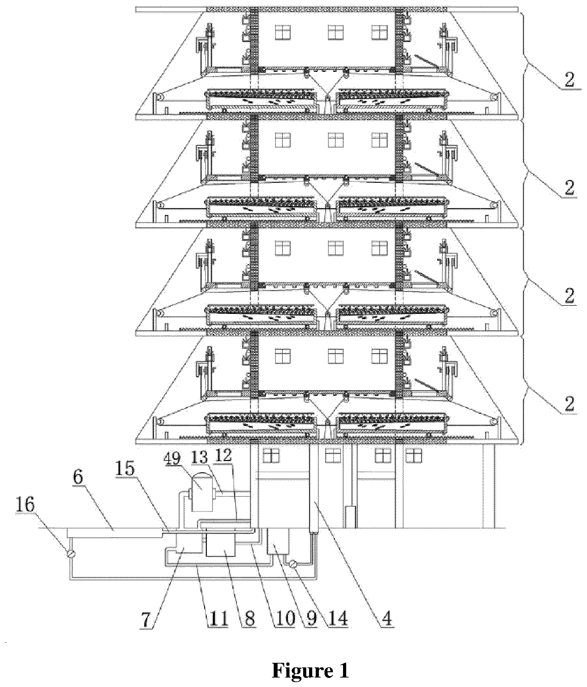

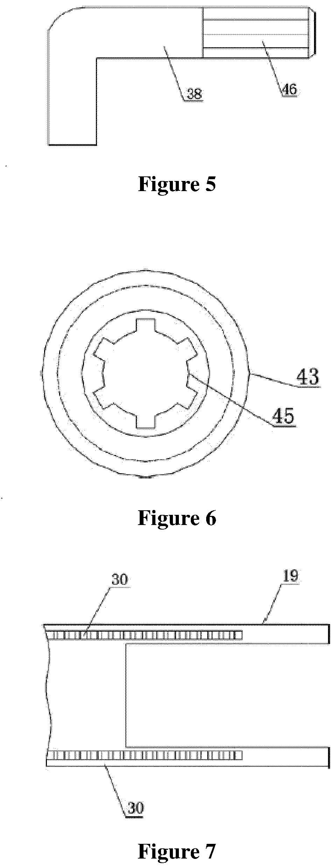

As shown in Figure 1 or 7, an ecological building with an organic agricultural and aquacultural function and an internal circulation treatment function is provided. Multi-storey family units 2 are located in an inner side of a wall body 1 of the ecological building, and a replaceable planting box 3 is provided on an outer wall of the wall body 1. Different kinds of organic crops are cultivated in the replaceable planting box 3 according to the season and demand. A multi-row irrigation pipe network 5 is provided between the replaceable planting boxes 3 for irrigating water and fertilizer, and a water and fertilizer irrigation pipeline 4 is further provided on the outer wall of the wall body 1. The water and fertilizer irrigation pipeline 4 is in communication with the irrigation pipe network 5. Each of the family units 2 includes an agricultural and aquacultural layer 17 and a residential layer 18. An outer edge of the agricultural and aquacultural layer 17 extends outside a corridor to form an annular U-shaped frame 19. An outer edge of the residential layer 18 extends outside the wall body 1 to form an annular production maintenance passage 20. A left retracting and releasing mechanism 21 and a right retracting and releasing mechanism 22 are respectively provided on a left side and a right side of the production maintenance passage 20. The left retracting and releasing mechanism 21 and the right retracting and releasing mechanism 22 are symmetrically arranged. A left fish vegetable symbiotic aquaculture device 23 and a right fish vegetable symbiotic aquaculture device 24 are provided on the agricultural and aquacultural layer 17. The left fish vegetable symbiotic aquaculture device 23 and the right fish vegetable symbiotic aquaculture device 24 are symmetrically arranged. The residential layer 18 includes multiple beams 25 arranged side by side, and a flip plate 26 is provided between two adjacent beams 25. An end of the flip plate 26 is hinged on one beam 25, and the other end of the flip plate 26 is placed on another beam 25. Furniture may be placed on the flip plate 26. When the flip plate 26 is turnover, the crops may be planted on a ceramic gravel layer 35 or may be picked, and ceramic gravel may be pushed aside to catch fish at the same time. An LED light source 53 is provided at the bottom of the flip plate 26. Through the LED light source 53, the crops on the ceramic gravel layer 35 may be provided with light, which is suitable for winter farming production.

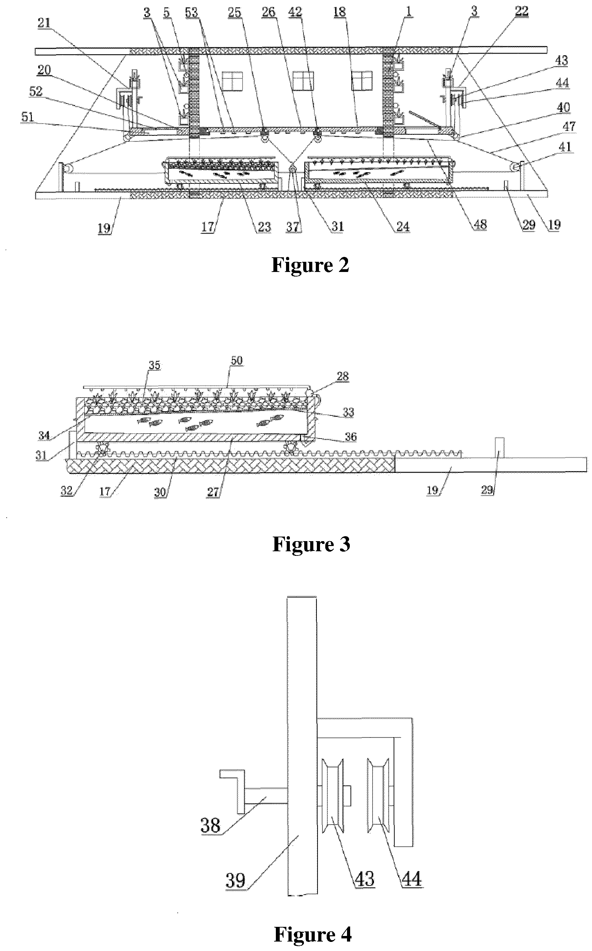

As shown in Figures 2 to 3, the right fish vegetable symbiotic aquaculture device 24 includes an agricultural and aquacultural box 27, a circulating pump 28 provided on the agricultural and aquacultural box 27, a right position-limiting baffle 29 fixedly arranged on a right side of the U-shaped frame 19, a rack 30 and a left position-limiting baffle 31 fixedly arranged on the top of the agricultural and aquacultural layer 17. The rack 30 is located between the left position-limiting baffle 31 and the right position-limiting baffle 29. The bottom of the agricultural and aquacultural box 27 is rotationally provided with multiple gears 32, and the multiple gears 32 are engaged with the rack 30. A partition plate 33 tilted downwards to the left is fixedly arranged in the agricultural and aquacultural box 27, and a water inlet hole 34 is provided at a low position of the partition plate 33. The ceramic gravel layer 35 is laid above the partition plate 33. The bottom of the agricultural and aquacultural box 27 tilts downwards to the right. A water outlet hole 36 is provided at the bottom of the agricultural and aquacultural box 27, and the water outlet hole 36 is located at a low position of a tilted plane at the bottom of the agricultural and aquacultural box 27. The water outlet hole 36 is connected to an inlet end of the circulating pump 28 via a pipeline, and an outlet end of the circulating pump 28 is connected to a drainage pipe 50 located above the ceramic gravel layer 35. Multiple water outlet joints are provided below the drainage pipe 50. Water is contained between the partition plate 33 and a bottom surface of the agricultural and aquacultural box 27, and fish are cultured in the water. The ceramic gravel in the ceramic gravel layer 35 is formed by sintering sludge. After being sintered, multiple micropores are present on the ceramic gravel, which can intercept the residual bait and the fish manure in the water, and facilitate the propagation of nitrifying bacteria at the same time. In addition, the accumulated ceramic gravel can secure the crops and realize soilless cultivation of crops. The water, the residual bait and the fish manure deposited at the bottom can be pumped out by the circulating pump 28 from the water outlet hole 36, and flows out through the water outlet joint below the drainage pipe 50 after being pumped and then enters into the ceramic gravel layer 35 after flowing out. The micropores in the ceramic gravel intercepts the residual bait and fish manure, and the nitrifying bacteria decomposes the residual bait and fish manure, so that the residual bait and fish manure become into the nitrate. The nitrate is used for fertilizing crops grown on the ceramic gravel layer 35. After being filtered, clear water flows into a water pool along a slope of the partition plate 33 via the water inlet hole 34. Therefore, not only is the water in a fish pond purified, but water and fertilizer can be applied to crops, thereby realizing the symbiosis of fish and vegetables, further realizing the organic agricultural and aquacultural function and the internal circulation treatment function, moreover, family members can eat fish and fresh vegetables without leaving the house. In addition, the circulating pump 28, the water outlet hole 36 and the water inlet hole 34 form a water circulation system, which can supply new oxygen to the fish pond, and facilitate healthy growth of the fish.

As shown in Figures 1, 2, 5, 6, the right retracting and releasing mechanism 22 includes an intermediate guide wheel 37 arranged between the left fish vegetable symbiotic aquaculture device 23 and the right fish vegetable symbiotic aquaculture device 24, a handle 38, a support 39 and a double grooved wheel 40 fixedly arranged on the right side of the production maintenance passage 20, a guide wheel A 41 arranged on the right side of the right position-limiting baffle 29, a guide wheel B 42 arranged at the bottom of the beam 25, an L plate arranged on the support 39, a first reel 43 rotationally installed on the support 39, and a second reel 44 rotationally installed on the L plate. The first reel 43 and the second reel 44 are provided with a key groove 45. The handle 38 is provided with a key 46 engaging with the key groove 45. The first reel 43 is wound with a first steel rope 47, and a head end of the first steel rope 47 sequentially passes through a trunking on the double grooved wheel 40 and a trunking of the guide wheel A 41, and is fixed on the right side of the agricultural and aquacultural box 27 of the right fish vegetable symbiotic aquaculture device 24. The second reel 44 is wound with a second steel rope 48, and a head end of the second steel rope 48 sequentially passes through another trunking on the double grooved wheel 40, a trunking of the guide wheel B 42 and a trunking of the intermediate guide wheel 37, and is fixed on the left side of the agricultural and aquacultural box 27 of the right fish vegetable symbiotic aquaculture device 24. The intermediate guide wheel 37 is a double trunking guide wheel. When the agricultural and aquacultural box 27 of the right fish vegetable symbiotic aquaculture device 24 needs to be pulled out to expose in the sun for promoting the growth of crops, first, the key 46 of the handle 38 is inserted into the key groove 45 in the first reel 43, and then the handle 38 is turned. The handle 38 drives the first reel 43 to rotate, the first reel 43 rolls up the first steel rope 47, and the first steel rope 47 drags the agricultural and aquacultural box 27 of the right fish vegetable symbiotic aquaculture device 24 to move to the right. When the agricultural and aquacultural box 27 touches the right position-limiting baffle 29, the agricultural and aquacultural box 27 cannot be dragged any more, which prevents the box from falling. At this time, the crops on the ceramic gravel layer 35 can happen photosynthesis. When the agricultural and aquacultural box 27 of the right fish vegetable symbiotic aquaculture device 24 needs to be pulled back to the original position, the key 46 of the handle 38 only needs to be inserted into the key groove 45 of the second reel 44, and then the handle 38 is turned. The handle 38 drives the second reel 44 to rotate, and the second reel 44 drags the agricultural and aquacultural box 27 of the right fish vegetable symbiotic aquaculture device 24 to move to the left. When the agricultural and aquacultural box 27 touches the left position-limiting baffle 31, the agricultural and aquacultural box 27 cannot be dragged any more, thereby realizing the reset of the agricultural and aquacultural box. The agricultural and aquacultural box 27 of the left fish vegetable symbiotic aquaculture device 23 can be dragged out or dragged back by operating the left retracting and releasing mechanism 21, and the operation mode is the same as that of the right retracting and releasing mechanism 22.

As shown in Figure 1, the ecological building further includes an artificial wetland system 6, a biogas digester 7, a gas storage tank 49, a vacuum base station 8 and a biogas slurry storage pool 9 provided below the ground. The biogas digester 7 is in communication with the vacuum base station 8. The vacuum base station 8 is connected to a vacuum toilet system via a vacuum pipeline 10. The biogas digester 7 is in communication with the biogas slurry storage pool 9 via a biogas slurry pipeline 11. An inlet end of the biogas digester 7 is connected to a discharge outlet of a garbage crusher via a black water delivery pipeline 12. A biogas outlet of the biogas digester 7 is connected to an inlet of the gas storage tank 49, and an outlet of the gas storage tank 49 is connected to a gas pipeline in a kitchen via a biogas pipeline 13. An outlet end of the biogas slurry storage pool 9 is connected to a lift pump 14, and the outlet end of the lift pump 14 is connected to a lower end portion of a water and fertilizer irrigation pipeline 4. The inlet end of the artificial wetland system 6 is connected to a reclaimed water collection pipeline 15, and the reclaimed water collection pipeline 15 is in communication with a reclaimed water discharge outlet in the building 1. The reclaimed water discharge outlet includes a kitchen wastewater discharge outlet, a laundry wastewater discharge outlet, a bath wastewater discharge outlet and a floor drain wastewater discharge outlet. An outlet end of the artificial wetland system 6 is connected to a water pump 16, and the water outlet of the water pump 16 is connected to the lower end portion of the water and fertilizer irrigation pipeline 4. The artificial wetland system 6 can realize the sponge city function.

The replaceable planting box 3 is arranged on the support 39. The production maintenance passage 20 is provided with an operation passage 51, and the top of the operation passage 51 is hinged with a cover plate 52. The width of the production maintenance passage 20 is 60~80cm. A safety net is provided on the edge of the production maintenance passage 20. The safety net can avoid objects and personnel falling. The safety net is made of weather resistant, high flame retardant and high strength materials. The fruits on the organic crops in the replaceable planting box 3 can be easily picked and replaced by personnel walking in the production maintenance passage 20.

A liquid level sensor is provided in the biogas slurry storage pool 9, and the liquid level sensor can monitor the liquid level of the biogas slurry in the biogas digester 7 in real time, and convert the liquid level information into electrical signal and transmit the electrical signal to the biogas slurry drip irrigation control system. The ecological building further includes a biogas slurry drip irrigation control system. The biogas slurry drip irrigation control system is electrically connected with the lift pump 14, the water pump 16, the circulating pump 28 and the liquid level sensor. The biogas slurry drip irrigation control system is a PLC controller. The on and off of the lift pump 14 and the water pump 16 can be controlled by the biogas slurry drip irrigation control system. If the water pump 16 is started, the water in the artificial wetland system 6 can be pumped into the water and fertilizer irrigation pipeline 4, and if the lift pump 14 is started, the biogas slurry and organic fertilizer in the biogas slurry storage pool 9 can be pumped into the water and fertilizer irrigation pipeline 4. The organic fertilizer is mixed with water and then enters into the irrigation pipe network 5. The water and fertilizer flow out from the outlet of the irrigation pipe network 5 to fertilize and water the organic crops in the replaceable planting box 3, so as to ensure the normal growth of organic crops.

The reclaimed water collection pipeline 15 is used for collecting kitchen wastewater, laundry wastewater, bath wastewater and floor drain wastewater, which are collected into the artificial wetland system 6. The vegetation in the artificial wetland system 6 degrades the harmful substances in the wastewater, and the treated water is deposited in the artificial wetland system 6. The vacuum toilet system collects human excreta, and the excreta is transported to the vacuum base station 8 via the vacuum pipeline 10. The excreta overflows into the biogas digester 7. The garbage crusher can crush the solid waste, and the crushed garbage is sent into the biogas digester 7 via the black water delivery pipeline 12. The biogas digester 7 carries out the resourceful treatment for the powdered solid waste and human excreta, which becomes into the organic fertilizer, the biogas slurry and the biogas after treatment. The biogas slurry and the organic fertilizer enter into the biogas slurry storage pool 9 via the biogas slurry pipeline 11, and the biogas sequentially enters into the gas pipeline via the biogas outlet and the biogas pipeline 13. The biogas provides fuel for the stoves in the kitchen of the household, thus replacing the natural gas and realizing self-sufficiency.

When applying water and fertilizer to the organic crops in the replaceable planting box 3, a flow ratio of organic fertilizer and water is selected according to the type of organic crops. The lift pump 14 and the water pump 16 are controlled to start by the biogas slurry drip irrigation control system. The organic fertilizer is pumped into the water and fertilizer irrigation pipeline 4 by the lift pump 14, and the treated water in the artificial wetland system 6 is pumped into the water and fertilizer irrigation pipe 4 by the water pump 16. The organic fertilizer is mixed with the water in the water and fertilizer irrigation pipeline 4 and then enters into the irrigation pipe network 5. The organic crops are fertilized through the irrigation pipe network 5, which avoids the pollution of the environment caused by the discharge of pollutants to the outside, and realizes the transformation of waste into treasure. Therefore, the ecological building has the internal circulation function, and the organic crops can be picked after bearing fruits. Therefore, the ecological building has the organic agriculture aquaculture function.

The foregoing is only preferred embodiments of the present application, it should be understood that the present application is not limited to the forms disclosed herein, and should not be regarded as exclusion of other embodiments, all within the scope of the appended claims.

## Claims

1. An ecological building with an organic agricultural and aquacultural function and an internal circulation treatment function, wherein, multi-storey family units (2) are provided on an inner side of a wall body (1) of the ecological building, and at least two replaceable planting boxes (3) are provided on an outer wall of the wall body (1), a multi-row irrigation pipe network (5) is provided between the replaceable planting boxes (3) for irrigating water and fertilizer, and a water and fertilizer irrigation pipeline (4) is further provided on the outer wall of the wall body (1), the irrigation pipeline (4) is in communication with the irrigation pipe network (5), **characterized in that** each family unit (2) comprises an agricultural and aquacultural layer (17) and a residential layer (18), an outer edge of the agricultural and aquacultural layer (17) extends outside a corridor to form an annular U-shaped frame (19), an outer edge of the residential layer (18) extends outside the wall body (1) to form an annular production maintenance passage (20), a left retracting and releasing mechanism (21) and a right retracting and releasing mechanism (22) are respectively provided on a left side and a right side of the production maintenance passage (20), a left fish vegetable symbiotic aquaculture device (23) and a right fish vegetable symbiotic aquaculture device (24) are provided on the agricultural and aquacultural layer (17); the residential layer comprises a plurality of beams (25) arranged side by side, and a flip plate (26) is provided between two adjacent beams (25), an end of the flip plate (26) is hinged on one beam (25), and the other end of the flip plate (26) is placed on another beam (25), a bottom of the flip plate (26) is provided with an LED light source (53); a wall between the agricultural and aquacultural layer (17) and the residential layer (18) is provided with a passage;
the right fish vegetable symbiotic aquaculture device (24) comprises an agricultural and aquacultural box (27), a circulating pump (28) arranged on the agricultural and aquacultural box (27), a right position-limiting baffle (29) fixedly arranged on a right side of the U-shaped frame (19), a rack (30) and a left position-limiting baffle (31) fixedly arranged on a top of the agricultural and aquacultural layer (17), and the rack (30) is located between the left position-limiting baffle (31) and the right position-limiting baffle (29), a bottom of the agricultural and aquacultural box (27) is rotationally provided with a plurality of gears (32), and the plurality of gears (32) are engaged with the rack (30), a partition plate (33) tilted downwards to left is fixedly arranged in the agricultural and aquacultural box (27), and a water inlet hole (34) is provided at a low position of the partition plate (33), a ceramic gravel layer (35) is laid above the partition plate (33), the bottom of the agricultural and aquacultural box (27) tilts downwards to right, a water outlet hole (36) is provided at the bottom of the agricultural and aquacultural box (27), and the water outlet hole (36) is located at a low position of a tilted plane at the bottom of the agricultural and aquacultural box (27), the water outlet hole (36) is connected to an inlet end of the circulating pump (28) via a pipeline, and an outlet end of the circulating pump (28) is connected to a drainage pipe (50) located above the ceramic gravel layer (35), a plurality of water outlet joints is provided below the drainage pipe (50);
the right retracting and releasing mechanism (22) comprises an intermediate guide wheel (37) arranged between the left fish vegetable symbiotic aquaculture device (23) and the right fish vegetable symbiotic aquaculture device (24), a handle (38), a support (39) and a double grooved wheel (40) fixedly arranged on the right side of the production maintenance passage (20), a guide wheel A (41) provided on the right side of the right position-limiting baffle (29), a guide wheel B (42) provided at the bottom of the beam (25), an L plate provided on the support (39), a first reel (43) rotationally installed on the support (39), and a second reel (44) rotationally installed on the L plate, the first reel (43) and the second reel (44) are provided with a key groove (45), the handle (38) is provided with a key (46) engaging with the key groove (45), the first reel (43) is wound with a first steel rope (47), and a head end of the first steel rope (47) sequentially passes through a trunking on the double grooved wheel (40) and a trunking of the guide wheel A (41), and is fixed on the right side of the agricultural and aquacultural box (27) of the right fish vegetable symbiotic aquaculture device (24); the second reel (44) is wound with a second steel rope (48), a head end of the second steel rope (48) sequentially passes through another trunking on the double grooved wheel (40), a trunking of the guide wheel B (42) and a trunking of the intermediate guide wheel (37), and is fixed on the left side of the agricultural and aquacultural box (27) of the right fish vegetable symbiotic aquaculture device (24), the intermediate guide wheel (37) is a double-trunking guide wheel;
the ecological building further comprises an artificial wetland system (6), a biogas digester (7), a gas storage tank (49), a vacuum base station (8) and a biogas slurry storage pool (9) provided below ground, and the biogas digester (7) is in communication with the vacuum base station (8), the vacuum base station (8) is connected to a vacuum toilet system via a vacuum pipeline (10), the biogas digester (7) is in communication with the biogas slurry storage pool (9) via a biogas slurry pipeline (11), an inlet end of the biogas digester (7) is connected to a discharge outlet of a garbage crusher via a black water delivery pipeline (12), a biogas outlet of the biogas digester (7) is connected to an inlet of the gas storage tank (49), and an outlet of the gas storage tank (49) is connected to a gas pipeline in a kitchen via a biogas pipeline (13), an outlet end of the biogas slurry storage pool (9) is connected to a lift pump (14), and the outlet end of the lift pump (14) is connected to a lower end portion of the water and fertilizer irrigation pipeline (4), the inlet end of the artificial wetland system (6) is connected to a reclaimed water collection pipeline (15), and the reclaimed water collection pipeline (15) is in communication with a reclaimed water discharge outlet in a building, the outlet end of the artificial wetland system (6) is connected to a water pump (16), and the water outlet of the water pump is connected to the lower end portion of the water and fertilizer irrigation pipeline (4).

2. The ecological building with the organic agricultural and aquacultural function and the internal circulation treatment function according to claim 1, wherein, the left fish vegetable symbiotic aquaculture device (23) and the right fish vegetable symbiotic aquaculture device (24) are symmetrically arranged.

3. The ecological building with the organic agricultural and aquacultural function and the internal circulation treatment function according to claim 1, wherein, the left retracting and releasing mechanism (21) and the right retracting and releasing mechanism (22) are symmetrically arranged.

4. The ecological building with the organic agricultural and aquacultural function and the internal circulation treatment function according to claim 1, wherein, the replaceable planting box (3) is arranged on the support (39).

5. The ecological building with the organic agricultural and aquacultural function and the internal circulation treatment function according to claim 1, wherein, the production maintenance passage (20) is provided with an operation passage (51), and a top of the operation passage (51) is hinged with a cover plate (52).

6. The ecological building with the organic agricultural and aquacultural function and the internal circulation treatment function according to claim 1, wherein, a width of the production maintenance passage (20) is 60~80cm.

7. The ecological building with the organic agricultural and aquacultural function and the internal circulation treatment function according to claim 1, wherein, a safety net is provided on an edge of the production maintenance passage (20).

8. The ecological building with the organic agricultural and aquacultural function and the internal circulation treatment function according to claim 1, wherein, a liquid level sensor is provided in the biogas slurry storage pool (9).

9. The ecological building with the organic agricultural and aquacultural function and the internal circulation treatment function according to claim 1, wherein, the ecological building further comprises a biogas slurry drip irrigation control system, which is electrically connected with the lift pump (14), the water pump (16), the circulating pump (28) and the liquid level sensor.

10. The ecological building with the organic agricultural and aquacultural function and the internal circulation treatment function according to claim 1, wherein, the key groove (45) is a spline groove, and the key (46) is a spline engaging with the spline groove.

## Patentansprüche

1. Ökologisches Gebäude mit einer organischen landwirtschaftlichen und Aquakulturfunktion und einer internen Zirkulationsbehandlungsfunktion, wobei mehrstöckige Familieneinheiten (2) an einer Innenseite eines Wandkörpers (1) des ökologischen Gebäudes vorgesehen sind und mindestens zwei austauschbare Pflanzkästen (3) an einer Außenwand des Wandkörpers (1) vorgesehen sind, ein mehrreihiges Bewässerungsrohrnetz (5) zwischen den austauschbaren Pflanzkästen (3) zur Bewässerung von Wasser und Dünger vorgesehen ist, und ferner eine Wasser- und Düngerbewässerungsleitung (4) an der Außenwand des Wandkörpers (1) vorgesehen ist, die Bewässerungsleitung (4) mit dem Bewässerungsrohrnetz (5) in Kommunikation steht, **dadurch gekennzeichnet, dass** jede Familieneinheit (2) eine landwirtschaftliche und Aquakulturschicht (17) und eine Wohnschicht (18) umfasst, eine Außenkante der landwirtschaftlichen und Aquakulturschicht (17) sich außerhalb eines Korridors erstreckt, um einen ringförmigen U-förmigen Rahmen (19) zu bilden, eine Außenkante der Wohnschicht (18) sich außerhalb des Wandkörpers (1) erstreckt, um einen ringförmigen Produktionserhaltungsdurchgang (20) zu bilden, ein linker Einzugs- und Freigabemechanismus (21) und ein rechter Einzugs- und Freigabemechanismus (22) jeweils auf einer linken Seite und einer rechten Seite des Produktionserhaltungsdurchgangs (20) vorgesehen sind, eine linke symbiotische Fischgemüse-Aquakulturvorrichtung (23) und eine rechte symbiotische Fischgemüse-Aquakulturvorrichtung (24) auf der landwirtschaftlichen und Aquakulturschicht (17) vorgesehen sind; die Wohnschicht umfasst eine Vielzahl von Balken (25), die nebeneinander angeordnet sind, und eine Klappplatte (26) ist zwischen zwei benachbarten Balken (25) vorgesehen, ein Ende der Klappplatte (26) ist an einem Balken (25) angelenkt und das andere Ende der Klappplatte (26) ist an einem anderen Balken (25) platziert, ein Boden der Klappplatte (26) ist mit einer LED-Lichtquelle (53) versehen; eine Wand ist zwischen der landwirtschaftlichen und Aquakulturschicht (17) und der Wohnschicht (18) mit einem Durchgang versehen;
die rechte symbiotische Fischgemüse-Aquakulturvorrichtung (24) umfasst einen landwirtschaftlichen und Aquakulturkasten (27), eine Umwälzpumpe (28), die am landwirtschaftlichen und Aquakulturkasten (27) angeordnet ist, einen rechten Positionsbegrenzungsabweiser (29), der fest an einer rechten Seite des U-förmigen Rahmens (19) angeordnet ist, eine Zahnstange (30) und einen linken Positionsbegrenzungsabweiser (31), der fest an einer Oberseite der landwirtschaftlichen und Aquakulturschicht (17) angeordnet ist und die Zahnstange (30) ist zwischen dem linken Positionsbegrenzungsabweiser (31) und dem rechten Positionsbegrenzungsabweiser (29) angeordnet, ein Boden des landwirtschaftlichen und Aquakulturkastens (27) ist drehbar mit einer Vielzahl von Zahnrädern (32) versehen und die Vielzahl von Zahnrädern (32) steht mit der Zahnstange (30) in Eingriff, eine nach links unten geneigte Trennplatte (33) ist fest in dem landwirtschaftlichen und Aquakulturkasten (27) angeordnet, und ein Wassereinlassloch (34) ist an einer niedrigen Position der Trennplatte (33) vorgesehen, eine keramische Kiesschicht (35) ist über der Trennplatte (33) verlegt, der Boden des landwirtschaftlichen und Aquakulturkastens (27) ist nach rechts unten geneigt, ein Wasserauslassloch (36) ist am Boden des landwirtschaftlichen und Aquakulturkastens (27) vorgesehen, und das Wasserauslassloch (36) ist an einer niedrigen Position einer geneigten Ebene am Boden des landwirtschaftlichen und Aquakulturkastens (27) angeordnet, das Wasserauslassloch (36) ist über eine Leitung mit einem Einlassende der Umwälzpumpe (28) verbunden und ein Auslassende der Umwälzpumpe (28) ist mit einem Drainagerohr (50) verbunden, das sich über der Keramikkiesschicht (35) befindet, eine Vielzahl von Wasserauslassverbindungen ist unter dem Drainagerohr (50) vorgesehen;
der rechte Einzugs- und Freigabemechanismus (22) umfasst ein Zwischenführungsrad (37), das zwischen der linken symbiotischen Fischgemüse-Aquakulturvorrichtung (23) und der rechten symbiotischen Fischgemüse-Aquakulturvorrichtung (24) angeordnet ist, einen Griff (38), einen Träger (39) und ein Doppelrillenrad (40), das fest an der rechten Seite des Produktionserhaltungsdurchgangs (20) angeordnet ist, ein Führungsrad A (41), das an der rechten Seite des rechten Positionsbegrenzungsabweisers (29) vorgesehen ist, ein Führungsrad B (42), das am Boden des Balkens (25) vorgesehen ist, eine L-Platte, die an dem Träger (39) vorgesehen ist, eine erste Spule (43), die drehbar an dem Träger (39) installiert ist, und eine zweite Spule (44), die drehbar an der L-Platte installiert ist, die erste Spule (43) und die zweite Spule (44) sind mit einer Paßfedernut (45) versehen, der Griff (38) ist mit einer Paßfeder (46) versehen, die in die Paßfedernut (45) eingreift, die erste Spule (43) ist mit einem ersten Stahlseil (47) gewickelt, und ein Kopfende des ersten Stahlseils (47) verläuft sequentiell durch eine Tragschiene an dem Doppelrillenrad (40) und eine Tragschiene des Führungsrads A (41) und ist an der rechten Seite des landwirtschaftlichen und Aquakulturkastens (27) der rechten symbiotischen Fischgemüse-Aquakulturvorrichtung (24) befestigt; die zweite Spule (44) ist mit einem zweiten Stahlseil (48) gewickelt, ein Kopfende des zweiten Stahlseils (48) verläuft sequentiell durch eine andere Tragschiene an dem Doppelrillenrad (40), eine Tragschiene des Führungsrads B (42) und eine Tragschiene des Zwischenführungsrads (37) und ist an der linken Seite des landwirtschaftlichen und Aquakulturkastens (27) der rechten symbiotischen Fischgemüse-Aquakulturvorrichtung (24) befestigt, das Zwischenführungsrad (37) ist ein Doppeltragschiene-Führungsrad;
das ökologische Gebäude ferner umfasst ein künstliches Feuchtgebietsystem (6), einen Biogasfermenter (7), einen Gasspeichertank (49), eine Vakuumbasisstation (8) und ein unterirdisch bereitgestelltes Biogasaufschlämmungspeicherbecken (9) und der Biogasfermenter (7) steht mit der Vakuumbasisstation (8) in Kommunikation, die Vakuumbasisstation (8) ist über eine Vakuumleitung (10) mit einem Vakuumtoilettensystem verbunden, der Biogasfermenter (7) steht über eine Biogasaufschlämmungsleitung (11) mit dem Biogasaufschlämmungsspeicherbecken (9) in Kommunikation, ein Einlassende des Biogasfermenters (7) ist über eine Schwarzwasserzufuhrleitung (12) mit einem Auslauf eines Müllbrechers verbunden, ein Biogasauslass des Biogasfermenters (7) ist mit einem Einlass des Gasspeichertanks (49) verbunden und ein Auslass des Gasspeichertanks (49) ist über eine Biogasleitung (13) mit einer Gasleitung in einer Küche verbunden, ein Auslassende des Biogasaufschlämmungsspeicherbeckens (9) ist mit einer Hebepumpe (14) verbunden und das Auslassende der Hebepumpe (14) ist mit einem unteren Endabschnitt der Wasser- und Düngerbewässerungsleitung (4) verbunden, das Einlassende des künstlichen Feuchtgebietsystems (6) ist mit einer Sammelleitung (15) für aufbereitetes Wasser verbunden und die Sammelleitung (15) für aufbereitetes Wasser steht mit einem Auslauf für aufbereitetes Wasser in einem Gebäude in Kommunikation, das Auslassende des künstlichen Feuchtgebietsystems (6) ist mit einer Wasserpumpe (16) verbunden und der Wasserauslass der Wasserpumpe ist mit dem unteren Endabschnitt der Wasser- und Düngemittelbewässerungsleitung (4) verbunden.

2. Ökologisches Gebäude mit der organischen landwirtschaftlichen und Aquakulturfunktion und der internen Zirkulationsbehandlungsfunktion nach Anspruch 1, wobei die linke symbiotische Fischgemüse-Aquakulturvorrichtung (23) und die rechte symbiotische Fischgemüse-Aquakulturvorrichtung (24) symmetrisch angeordnet sind.

3. Ökologisches Gebäude mit der organischen landwirtschaftlichen und Aquakulturfunktion und der internen Zirkulationsbehandlungsfunktion nach Anspruch 1, wobei der linke Einzugs- und Freigabemechanismus (21) und der rechte Einzugs- und Freigabemechanismus (22) symmetrisch angeordnet sind.

4. Ökologisches Gebäude mit der organischen landwirtschaftlichen und Aquakulturfunktion und der internen Zirkulationsbehandlungsfunktion nach Anspruch 1, wobei der austauschbare Pflanzkasten (3) auf dem Träger (39) angeordnet ist.

5. Ökologisches Gebäude mit der organischen landwirtschaftlichen und Aquakulturfunktion und der internen Zirkulationsbehandlungsfunktion nach Anspruch 1, wobei der Produktionserhaltungsdurchgang (20) mit einem Betriebsdurchgang (51) versehen ist und eine Oberseite des Betriebsdurchgangs (51) mit einer Abdeckplatte (52) angelenkt ist.

6. Ökologisches Gebäude mit der organischen landwirtschaftlichen und Aquakulturfunktion und der internen Zirkulationsbehandlungsfunktion nach Anspruch 1, wobei eine Breite des Produktionserhaltungsdurchgangs (20) 60~80 cm beträgt.

7. Ökologisches Gebäude mit der organischen landwirtschaftlichen und Aquakulturfunktion und der internen Zirkulationsbehandlungsfunktion nach Anspruch 1, wobei ein Sicherheitsnetz an einem Rand des Produktionserhaltungsdurchgangs (20) vorgesehen ist.

8. Ökologisches Gebäude mit der organischen landwirtschaftlichen und Aquakulturfunktion und der internen Zirkulationsbehandlungsfunktion nach Anspruch 1, wobei ein Flüssigkeitspegelsensor in dem Biogasaufschlämmungsspeicherbecken (9) vorgesehen ist.

9. Ökologisches Gebäude mit der organischen landwirtschaftlichen und Aquakulturfunktion und der internen Zirkulationsbehandlungsfunktion nach Anspruch 1, wobei das ökologische Gebäude ferner ein Biogasaufschlämmungstropfbewässerungssteuersystem umfasst, das elektrisch mit der Hebepumpe (14), der Wasserpumpe (16), der Umwälzpumpe (28) und dem Flüssigkeitspegelsensor verbunden ist.

10. Ökologisches Gebäude mit der organischen landwirtschaftlichen und Aquakulturfunktion und der internen Zirkulationsbehandlungsfunktion nach Anspruch 1, wobei die Paßfedernut (45) eine Keilnut ist und die Paßfeder (46) ein Keil ist, der in die Keilnut eingreift.

## Revendications

1. Bâtiment écologique avec fonction d'aquaculture agricole organique et fonction de traitement de circulation interne, dans lequel des unités familiales à plusieurs étages (2) sont prévues sur un côté interne d'un corps de paroi (1) du bâtiment écologique, et au moins deux boites de plantation remplaçables (3) sont prévues sur une paroi externe du corps de paroi (1), un réseau de tuyaux d'irrigation à plusieurs rangées (5) est prévu entre les boites de plantation remplaçables (3) pour l'irrigation d'eau et d'engrais, et une canalisation d'irrigation d'eau et d'engrais (4) est également prévue sur la paroi externe du corps de paroi (1), la canalisation d'irrigation (4) étant en communication avec le réseau de tuyaux d'irrigation (5), **caractérisé en ce que** chaque unité familiale (2) comprend une couche agricole et aquacole (17) et une couche résidentielle (18), un bord externe de la couche agricole et aquacole (17) s'étend à l'extérieur d'un couloir pour former un cadre annulaire en forme de U (19), un bord externe de la couche résidentielle (18) s'étend à l'extérieur du corps de paroi (1) pour former un passage annulaire de maintien de production (20), un mécanisme de rétraction et de libération gauche (21) et un mécanisme de rétraction et de libération droit (22) sont respectivement prévus sur un côté gauche et un côté droit du passage de maintien de production (20), un dispositif d'aquaculture symbiotique pour poissons et légumes gauche (23) et un dispositif d'aquaculture symbiotique pour poissons et légumes droit (24) sont prévus sur la couche agricole et aquacole (17); la couche résidentielle comprend une pluralité de poutres (25) disposées côte à côte, et une plaque pivotante (26) est prévue entre deux poutres adjacentes (25), une extrémité de la plaque pivotante (26) est articulée sur une poutre (25), et l'autre extrémité de la plaque pivotante (26) est placée sur une autre poutre (25), un fond de la plaque pivotante (26) est pourvu d'une source de lumière LED (53); une paroi entre la couche agricole et aquacole (17) et la couche résidentielle (18) est pourvu d'un passage;
le dispositif d'aquaculture symbiotique pour poissons et légumes droit (24) comprend une boite agricole et aquacole (27), une pompe de circulation (28) disposée sur la boite agricole et aquacole (27), un déflecteur limitant la position droit (29) disposé de manière fixe sur un côté droit du cadre en forme de U (19), un support (30) et un déflecteur limitant la position gauche (31) disposés de manière fixe sur le dessus de la couche agricole et aquacole (17), et le support (30) est situé entre le déflecteur limitant la position gauche (31) et le déflecteur limitant la position droit (29), un fond de la boite agricole et aquacole (27) est pourvu en rotation d'une pluralité d'engrenages (32), et la pluralité d'engrenages (32) est engagée avec le support (30), une plaque de séparation (33) inclinée vers le bas à gauche est disposée de manière fixe dans la boite agricole et aquacole (27), et un trou d'entrée d'eau (34) est prévu dans une position basse de la plaque de séparation (33), une couche de gravier céramique (35) est posée au-dessus de la plaque de séparation (33), le fond de la boite agricole et aquacole (27) s'incline vers le bas à droite, un trou de sortie d'eau (36) est prévu au fond de la boite agricole et aquacole (27), et le trou de sortie d'eau (36) est situé dans une position basse d'un plan incliné au fond de la boite agricole et aquacole (27), le trou de sortie d'eau (36) est relié à une extrémité d'entrée de la pompe de circulation (28) par l'intermédiaire d'une canalisation, et une extrémité de sortie de la pompe de circulation (28) est reliée à un tuyau de drainage (50) situé au-dessus de la couche de gravier céramique (35), une pluralité de joints de sortie d'eau est prévue en dessous du tuyau de drainage (50);
le mécanisme de rétraction et de libération droit (22) comprend une roue de guidage intermédiaire (37) disposée entre le dispositif d'aquaculture symbiotique pour poissons et légumes gauche (23) et le dispositif d'aquaculture symbiotique pour poissons et légumes droit (24), une poignée (38), un support (39) et une roue rainurée double (40) disposée de manière fixe sur le côté droit du passage de maintien de production (20), une roue de guidage A (41) prévue sur le côté droit du déflecteur limitant la position droit (29), une roue de guidage B (42) prévue au fond de la poutre (25), une plaque L prévue sur le support (39), une première bobine (43) installée en rotation sur le support (39), et une seconde bobine (44) installée en rotation sur la plaque L, la première bobine (43) et la seconde bobine (44) sont pourvues d'une rainure de clavette (45), la poignée (38) est pourvue d'une clavette (46) s'engageant dans la rainure de clavette (45), la première bobine (43) est enroulée avec une première corde en acier (47), et une extrémité de tête de la première corde en acier (47) passe séquentiellement par une liaison de la roue rainurée double (40) et une liaison de la roue de guidage A (41), et est fixée sur le côté droit de la boite agricole et aquacole (27) du dispositif d'aquaculture symbiotique pour poissons et légumes droit (24); la seconde bobine (44) est enroulée avec une seconde corde en acier (48), une extrémité de tête de la seconde corde en acier (48) passe séquentiellement par une autre liaison de la roue rainurée double (40), une liaison de la roue de guidage B (42) et une liaison de la roue de guidage intermédiaire (37), et est fixée sur le côté gauche de la boite agricole et aquacole (27) du dispositif d'aquaculture symbiotique pour poissons et légumes droit (24), la roue de guidage intermédiaire (37) est une roue de guidage à double liaison;
le bâtiment écologique comprend en outre un système de zone humide artificiel (6), un digesteur de biogaz (7), un réservoir de stockage de gaz (49), une station de base sous vide (8) et un bassin de stockage de lisier de biogaz (9) prévus sous le sol, et le digesteur de biogaz (7) est en communication avec la station de base sous vide (8), la station de base sous vide (8) est reliée à un système de toilettes sous vide par l'intermédiaire d'une canalisation sous vide (10), le digesteur de biogaz (7) est en communication avec le bassin de stockage de lisier de biogaz (9) par l'intermédiaire d'une canalisation de lisier de biogaz (11), une extrémité d'entrée du digesteur de biogaz (7) est reliée à une sortie de décharge d'un broyeur d'ordures par l'intermédiaire d'une canalisation d'alimentation en eaux noires (12), une sortie de biogaz du digesteur de biogaz (7) est reliée à une entrée du réservoir de stockage de gaz (49), et une sortie du réservoir de stockage de gaz (49) est reliée à une canalisation de gaz dans une cuisine par l'intermédiaire d'une canalisation de biogaz (13), une extrémité de sortie du bassin de stockage de lisier de biogaz (9) est reliée à une pompe de relevage (14), et l'extrémité de sortie de la pompe de relevage (14) est reliée à une partie inférieure de la canalisation d'irrigation d'eau et d'engrais (4), l'extrémité d'entrée du système de zone humide artificiel (6) est reliée à une canalisation de collecte d'eau recyclée (15) et la canalisation de collecte d'eau recyclée (15)est en communication avec une sortie de décharge d'eau recyclée, l'extrémité de sortie du système de zone humide artificiel (6) est reliée à une pompe à eau (16), et la sortie d'eau de la pompe à eau est reliée à la partie d'extrémité inférieure de la canalisation d'irrigation d'eau et d'engrais (4).

2. Bâtiment écologique avec fonction d'aquaculture agricole organique et fonction de traitement de circulation interne selon la revendication 1, dans lequel le dispositif d'aquaculture symbiotique pour poissons et légumes gauche (23) et le dispositif d'aquaculture symbiotique pour poissons et légumes droit (24) sont disposés de manière symétrique.

3. Bâtiment écologique avec fonction d'aquaculture agricole organique et fonction de traitement de circulation interne selon la revendication 1, dans lequel le mécanisme de rétraction et de libération gauche (21) et le mécanisme de rétraction et de libération droit (22) sont disposés de manière symétrique.

4. Bâtiment écologique avec fonction d'aquaculture agricole organique et fonction de traitement de circulation interne selon la revendication 1, dans lequel la boite de plantation remplaçable (3) est disposée sur le support (39).

5. Bâtiment écologique avec fonction d'aquaculture agricole organique et fonction de traitement de circulation interne selon la revendication 1, dans lequel le passage de maintien de production (20) est pourvu d'un passage de fonctionnement (51), et un sommet du passage de fonctionnement (51) est articulé avec une plaque de couverture (52).

6. Bâtiment écologique avec fonction d'aquaculture agricole organique et fonction de traitement de circulation interne selon la revendication 1, dans lequel la largeur du passage de maintien de production (20) est de 60~80cm.

7. Bâtiment écologique avec fonction d'aquaculture agricole organique et fonction de traitement de circulation interne selon la revendication 1, dans lequel un filet de sécurité est prévu sur un bord du passage de maintien de production (20).

8. Bâtiment écologique avec fonction d'aquaculture agricole organique et fonction de traitement de circulation interne selon la revendication 1, dans lequel un capteur de niveau de liquide est prévu dans le bassin de stockage de lisier de biogaz (9).

9. Bâtiment écologique avec fonction d'aquaculture agricole organique et fonction de traitement de circulation interne selon la revendication 1, dans lequel le bâtiment écologique comprend en outre un système de contrôle de l'irrigation goutte-à-goutte de lisier de biogaz, qui est relié électriquement à la pompe de relevage (14), à la pompe à eau (16), à la pompe de circulation (28) et au capteur de niveau de liquide.

10. Bâtiment écologique avec fonction d'aquaculture agricole organique et fonction de traitement de circulation interne selon la revendication 1, dans lequel la rainure de clavette (45) est une rainure de cannelure, et la clavette (46) est une cannelure s'engageant dans la rainure de cannelure.
